# EUROPÄISCHE PATENTSCHRIFT

(11) **EP 2 726 314 B1**
(45) Veröffentlichungstag und Bekanntmachung des Hinweises auf die Patenterteilung: **21.10.2015**
(21) Anmeldenummer: 12718239.2
(22) Anmeldetag: 04.05.2012
(51) Int. Cl.: B60K 25/06, H02K 7/18

(54) **GENERATOREINHEIT FÜR EIN LANDWIRTSCHAFTLICHES ODER KOMMUNALES NUTZFAHRZEUG**
GENERATOR UNIT FOR AN AGRICULTURAL OR COMMUNAL COMMERCIAL VEHICLE
GROUPE GÉNÉRATEUR DESTINÉ À UN VÉHICULE UTILITAIRE AGRICOLE OU COMMUNAL

(30) Priorität: 28.06.2011 DE 102011078192
(43) Veröffentlichungstag der Anmeldung: 07.05.2014
(73) Patentinhaber: ZF Friedrichshafen AG, 88038 Friedrichshafen (DE)
(72) Erfinder: GOETZ, Manuel, 88212 Ravensburg (DE); ZIEGLER, Johannes, 72818 Trochtelfingen (DE); SAGMEISTER, Martin, 94036 Passau (DE); MOHR, Mark, 88069 Tettnang (DE)
(86) Internationale Anmeldenummer: PCT/EP2012/058186
(87) Internationale Veröffentlichungsnummer: WO 2013/000606

(56) Entgegenhaltungen:
- DE-B4- 10 303 050
- FR-A1- 2 511 955
- US-A- 3 042 808

## Beschreibung

Die Erfindung betrifft eine Generatoreinheit für ein landwirtschaftliches oder kommunales Nutzfahrzeug, insbesondere einen Traktor, umfassend ein Generatorgehäuse und mindestens eine Welle, welche durch das Generatorgehäuse drehbar gelagert hindurchgeführt ist und an einem ersten Ende eine Ankoppelung für eine Zapfwelle des Nutzfahrzeuges ausbildet, während durch die mindestens eine Welle an einem zweiten Ende ein Anschluss für eine Eingangswelle eines Anbaugeräts definiert ist, wobei in dem Generatorgehäuse zumindest ein elektrischer Generator aufgenommen ist, welcher durch die mindestens eine Welle antreibbar ist.

Landwirtschaftliche oder kommunale Nutzfahrzeuge verfügen üblicherweise über Anhängevorrichtungen, an welchen Anbaugeräte zum Ausführen bestimmter Arbeitstätigkeiten angebracht werden können. So weist ein Traktor zumeist sowohl frontseitig als auch heckseitig entsprechende Anhängepunkte auf, welche zumindest auf der Heckseite als hydraulischer Kraftheber zum Anheben des jeweils angekoppelten Anbaugeräts ausgestaltet sind. Konventionell erfolgt dabei ein mechanischer Antrieb des jeweiligen Anbaugeräts über eine Zapfwelle des Traktors.

Zudem kommen bei stationären Arbeitseinsätzen unter anderem auch stationäre Generatoreinheiten zum Einsatz, welche nicht angehängt und bei stehendem Nutzfahrzeug mechanisch über die Zapfwelle des Nutzfahrzeuges betrieben werden, um beispielsweise als Notstromaggregate auf landwirtschaftlichen Einrichtungen eine Stromquelle auszubilden. Neben einem derartigen stationären Gebrauch kommen jedoch auch mobile Generatoreinheiten zur Anwendung, welche dann als jeweils an dem Nutzfahrzeug angehängte Einheit auch während einer Fahrt des Nutzfahrzeuges Strom zur Verfügung stellen. Diese mobilen Generatoreinheiten werden dann ebenfalls über die jeweilige Zapfwelle des Nutzfahrzeuges angetrieben und liefern entsprechend elektrischen Strom für anderweitige an dem jeweiligen Nutzfahrzeug angehängte Anbaugeräte.

Aus der gattungsgemäßen DE 103 03 050 B4 geht eine derartige mobile Generatoreinheit für ein landwirtschaftliches Nutzfahrzeug, beispielsweise einen Traktor, hervor, wobei diese Generatoreinheit über ein Generatorgehäuse verfügt, welches drehfest an einem Fahrzeugrahmen des Nutzfahrzeuges befestigt werden kann und eine Eingangswelle, sowie eine Ausgangswelle drehbar gelagert aufnimmt. Dabei wird die Eingangswelle im angehängten Zustand der Generatoreinheit mit einer Zapfwelle des Nutzfahrzeuges verbunden, wobei die Ausgangswelle antriebsmäßig mit der Eingangswelle in Verbindung steht und im weiteren Verlauf mit einer Eingangswelle eines Anbaugeräts des Nutzfahrzeuges verbunden werden kann. In der Folge wird also eine Drehbewegung einer Zapfwelle des Nutzfahrzeuges auf die Eingangswelle und im weiteren Verlauf auf die Ausgangswelle der Generatoreinheit übertragen, über welche dann ein weiteres, an dem Nutzfahrzeug angegliedertes Anbaugerät mechanisch antreibbar ist. Des Weiteren ist in dem Generatorgehäuse ein elektrischer Generator mit einem Rotor aufgenommen, wobei der Rotor mit der Eingangswelle der Generatoreinheit verbunden ist, so dass elektrischer Strom bei Rotation der Eingangswelle zur Verfügung gestellt wird. Hierdurch können elektrische Verbraucher, wie beispielsweise elektrische Antriebe, des zusätzlich zu der mobilen Generatoreinheit angehängten Anbaugeräts auch mit höheren Nennspannungen betrieben werden, als ein Bordnetz des Nutzfahrzeuges üblicherweise zur Verfügung stellt.

Ausgehend vom vorstehend beschriebenen Stand der Technik ist es die Aufgabe der vorliegenden Erfindung, eine Generatoreinheit für ein landwirtschaftliches oder kommunales Nutzfahrzeug auszubilden, bei welchem leistungsfähige und dementsprechend großbauende elektrische Generatoren eingesetzt werden können, gleichzeitig aber ein Kraftheber des Nutzfahrzeuges weiterhin für zusätzliche Anbaugeräte zur Verfügung steht.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder.

Gemäß der Erfindung umfasst eine Generatoreinheit für ein landwirtschaftliches oder kommunales Nutzfahrzeug ein Generatorgehäuse und mindestens eine Welle, welche gelagert durch das Generatorgehäuse hindurchgeführt ist und an einem ersten Ende eine Ankopplung für eine Zapfwelle des Nutzfahrzeuges ausbildet. Des Weiteren definiert diese mindestens eine Welle an einem zweiten, entgegengesetzten Ende einen Anschluss, über welchen eine Verbindung zu einer Eingangswelle eines weiteren, an dem Nutzfahrzeug angegliederten Anbaugeräts herstellbar ist. Schließlich ist noch in dem Generatorgehäuse zumindest ein elektrischer Generator aufgenommen, welcher durch die mindestens eine Welle antreibbar ist.

Im Sinne der Erfindung können sowohl die Ankopplung für die Zapfwelle des Nutzfahrzeuges als auch der Anschluss für die Eingangswelle des Anbaugeräts an Enden einer einzigen Welle ausgebildet sein, welche dann durch das Generatorgehäuse hindurchgeführt ist. Alternativ dazu können die beiden Verbindungsstellen jedoch auch an getrennten Wellen vorgesehen sein, welche dann innerhalb des Generatorgehäuses miteinander gekoppelt sind. Eine Ankoppelung für die Zapfwelle ist hierbei bevorzugt als Wellenabschnitt mit einer zur Zapfwelle korrespondierenden Innenverzahnung ausgestaltet, wobei die Verzahnung je nach Profil der Zapfwelle hierbei mit einer Keilwellen- oder Evolventenprofilverzahnung versehen sein kann. Der Anschluss für die Eingangswelle auf der zweiten Seite des Generatorgehäuses wird hingegen insbesondere mit einem einer Kontur der Zapfwelle entsprechenden Profil ausgestaltet, so dass die Eingangswelle des Anbaugeräts auf gleiche Art und Weise mit dem Anschluss an der Generatoreinheit verbunden werden kann, wie sie auch direkt mit der Zapfwelle des Nutzfahrzeuges gekoppelt werden würde. Schließlich kann in dem Generatorgehäuse auch mehr als ein elektrischer Generator aufgenommen sein, wobei bei mehreren Generatoren diese dann gegebenenfalls auch Strom mit unterschiedlichen Nennspannungen zur Verfügung stellen können.

Die Erfindung umfasst nun die technische Lehre, dass zudem eine Aufnahmevorrichtung vorgesehen ist, welche mit dem Generatorgehäuse in Verbindung steht und seitens des ersten Endes der mindestens einen Welle Aufnahmestellen zur Anbindung an Aufhängevorrichtungen eines Krafthebers des Nutzfahrzeuges ausbildet, wohingegen die Aufnahmevorrichtung seitens des zweiten Endes der mindestens einen Welle über Anbindungsstellen zur Aufnahme des Anbaugeräts verfügt. Dabei entsprechen die Anbindungsstellen der Aufnahmevorrichtung den Aufhängevorrichtungen des Hubwerks jeweils in Gestalt und Ausrichtung. Mit anderen Worten verfügt die erfindungsgemäße Generatoreinheit also über eine Aufnahmevorrichtung, welche derart ausgestaltet ist, dass auf einer ersten dem Kraftheber des Nutzfahrzeuges zugewandten Generatorgehäuseseite eine Anbindung an den Kraftheber darstellbar ist und auf einer zweiten dem Anbaugerät zugewandten Seite des Generatorgehäuses eine Aufnahme eines Anbaugeräts an der Aufnahmevorrichtung erfolgen kann. Hierbei sind die Anbindungsstellen seitens des Anbaugeräts so ausgeführt, dass eine dem Kraftheber entsprechende Aufhängung ausgestaltet wird. Mittels einer derartigen Ausführung einer Generatoreinheit ist es möglich, auch leistungsfähige und damit großbauende elektrische Generatoren vorzusehen und trotz des damit auch größeren Generatorgehäuses dennoch den Kraftheber des Nutzfahrzeuges für die weitere Anbindung eines Anbaugeräts nutzen zu können. Denn durch Vorsehen der Aufnahmevorrichtung wird ein Element zwischengeschaltet, welches einerseits die Anbindung der Generatoreinheit an den Kraftheber darstellt und andererseits eine dem Kraftheber entsprechende Aufnahme für das weitere Anbaugerät ausbildet. Es wird also bei gleichzeitigem Ausgestalten eines ausreichenden Zwischenraumes zwischen Kraftheber und Anbaugerät für die Platzierung eines größeren Generatorgehäuses dennoch ein Führen eines der Generatoreinheit nachgeschalteten Anbaugeräts ermöglicht. Insgesamt kann damit ohne Funktionseinbußen eine Integration eines oder mehrerer leistungsfähiger elektrischer Generatoren zwischen Kraftheber und Anbaugerät realisiert werden.

Im Unterschied hierzu kann bei der DE 103 03 050 B4 nur ein klein bauender Generator Anwendung finden, um dennoch ein weiteres Anbaugerät an einem dort vorgesehenen Kraftheber des Nutzfahrzeuges vorsehen zu können. Denn bei Verwendung eines größeren Generators mit mehr Leistung wird der Platzbedarf der Generatoreinheit zu groß, so dass ein direktes Anhängen des weiteren Anbaugeräts am Kraftheber unmöglich wird. Seitens der Generatoreinheit sind keine entsprechenden Verbindungsstellen ausgestaltet, um das Anbaugerät aufnehmen zu können.

Gemäß einer vorteilhaften Ausführungsform der Erfindung ist die Aufnahmevorrichtung als Tragrahmen mit einer dreieckförmigen Gestalt ausgeführt, welcher im Bereich von Eckpunkten mit jeweils einer Aufnahmestelle in Form je eines Aufnahmebolzens und mit jeweils einer entgegengesetzt zur jeweiligen Aufnahmestelle orientierten Anbindungsstelle in Form je eines Aufnahmehakens versehen ist, wobei die Aufnahmebolzen zu den Aufhängevorrichtungen in Form von Fanghaken korrespondieren und die Aufnahmehaken den Fanghaken in Gestalt und Ausrichtung entsprechen. Mittels der Ausgestaltung der Aufnahmevorrichtung als Tragrahmen, welcher durch seine dreieckförmige Gestalt und der Platzierung der Verbindungstellen an Eckpunkten den Aufhängevorrichtungen eines Dreipunktkrafthebers des Nutzfahrzeuges angepasst ist, kann ein belastbares Zwischenglied zwischen dem Kraftheber und dem jeweiligen Anbaugerät ausgestaltet werden.

In Weiterbildung der Erfindung sind die Aufnahmestellen und die Anbindungsstellen jeweils als lösbare Einzelelemente der Aufnahmevorrichtung ausgestaltet. Die die Aufnahmestellen zur Anbindung an den Kraftheber ausbildenden Einzelelemente und die die Anbindungsstellen zur Aufnahme des Anbaugeräts definierenden Einzelelement können dabei bevorzugt hinsichtlich ihrer Anordnung zum Generatorgehäuse getauscht werden, so dass das Generatorgehäuse mit beiden seiner Seiten jeweils zum Kraftheber orientiert am Nutzfahrzeug angebracht werden kann. Hierdurch kann eine Drehrichtung eines Rotors des elektrischen Generators an eine Drehrichtung der Zapfwelle des Nutzfahrzeuges angepasst werden, indem das Generatorgehäuse entsprechend am Nutzfahrzeug angeordnet und eine dementsprechend orientierte Einleitung einer Drehbewegung über die Zapfwelle in die mindestens eine Welle der Generatoreinheit stattfindet. Im Sinne der Erfindung sind die Einzelelemente hierbei insbesondere als mit den übrigen Komponenten der Aufnahmevorrichtung verschraubbare Einzelteile in Form der Aufnahmebolzen und Aufnahmehaken ausgeführt, welche dann an den gewünschten Positionen mit dem Generatorgehäuse oder einem Tragrahmen befestigt werden. Die mindestens eine Welle kann hierbei als Steckwelle ausgeführt sein, welche je nach Ausrichtung des Generatorgehäuses unterschiedlich durch das Gehäuse hindurchgeführt werden kann. Zudem ist es auch denkbar, die Aufnahmestellen und die Anbindungsstellen hinsichtlich ihrer Position anpassbar an der Aufnahmevorrichtung auszugestalten, so dass eine Anpassung an Befestigungspunkte seitens des Krafthebers und seitens des Anbaugeräts vorgenommen werden kann.

Entsprechend einer weiteren Ausgestaltung der Erfindung ist die Aufnahmevorrichtung als separates Bauteil ausgeführt, an welchem das Generatorgehäuse angebracht ist. Durch diese Maßnahme kann die Aufnahmevorrichtung aus einem anderen Material als das Generatorgehäuse hergestellt sein, so dass problemlos eine ausreichende Belastbarkeit im Hinblick auf das anzubringende Anbaugerät dargestellt werden kann. So kann die Aufnahmevorrichtung aus Stahl hergestellt sein, während das Generatorgehäuse aus Gussmaterial gefertigt ist. Des Weiteren kann auch eine einfache Anpassung einer Drehrichtung eines jeweiligen Rotors des elektrischen Generators an die Drehrichtung der Zapfwelle des Nutzfahrzeuges vorgenommen werden, indem bei einer lösbaren Verbindung zwischen Generatorgehäuse und Aufnahmevorrichtung einfach das Generatorgehäuse hinsichtlich seiner Orientierung zu der Aufnahmevorrichtung umgedreht wird. Allerdings ist auch einstückige Ausführung von Aufnahmevorrichtung und Generatorgehäuse prinzipiell denkbar.

In Weiterbildung der Erfindung ist zwischen der mindestens einen Welle und dem zumindest einen elektrischen Generator je ein Getriebe vorgesehen, durch welches eine Drehbewegung der mindestens einen Welle auf je einen Rotor des zumindest einen Generators übersetzbar ist. Durch diese Maßnahme kann eine Drehzahl des jeweiligen Rotors des zumindest einen Generators optimal an eine Zapfwellendrehzahl angepasst werden, mit welcher die mindestens eine Welle läuft. Insbesondere können hierdurch kompaktbauende schnelllaufende elektrische Generatoren verwendet werden. Im Sinne der Erfindung kann das je eine Getriebe hierbei als Stirnradstufe, Planetenstufe oder Riemen- oder Kettentrieb ausgeführt sein. Zudem ist es auch denkbar, durch entsprechende Gestaltung des je einen Getriebes ein gezieltes Zuschalten des zumindest einen Generators zu ermöglichen, so dass eine Stromerzeugung über den Generator nur bei bestimmten, gewünschten Betriebssituationen stattfindet. Dieses Zuschalten kann dabei dann ggf. über eine übergeordnete Steuerung oder gezielt durch den Fahrzeugführer eingeleitet werden.

Gemäß einer weiteren, vorteilhaften Ausführungsform der Erfindung ist eine Steuerelektronik vorgesehen, welche mit dem zumindest einen Generator in Verbindung steht. Diese Steuerelektronik umfasst hierbei bevorzugt eine Leistungselektronik, über welche der zumindest ein Generator ansteuerbar ist, wobei diese Leistungselektronik entweder in dem Generatorgehäuse untergebracht oder in einem separaten, aber an dem Generatorgehäuse baulich angebundenen Gehäuse aufgenommen sein kann. Über die Leistungselektronik wird dann die gezielte Steuerung des zumindest einen elektrischen Generators vorgenommen und ggf. auch eine Überwachung von Parametern des Generators, wie beispielsweise einer Temperatur, etc. dargestellt. Ferner kann durch eine derartige Leistungselektronik auch ein elektrisches Zuschalten des zumindest einen Generators gesteuert werden, so dass dieser, ähnlich wie bei dem mechanischen Zuschalten der vorgenannten Variante, nur in bestimmten Situationen angetrieben wird und Strom erzeugt.

Vorteilhafterweise verfügt die Steuerelektronik dabei über ein Steuergerät, welches den zumindest einen Generator regelt und mit einer Datenschnittstelle verbunden ist. Über diese Datenschnittstelle kann dann eine Anbindung an ein Steuersystem des Nutzfahrzeuges und/oder des Anbaugeräts erfolgen und dementsprechend eine Regelung des Generators fahrzeugseitig und/oder anbaugerätseitig vorgenommen werden. Dabei ist auch denkbar, eine softwaremäßige Anpassung einer Drehbewegung eines Rotors des zumindest einen Generators an die jeweiligen Zapfwellendrehrichtung über die Datenschnittstelle einzuleiten. Alternativ dazu kann aber auch ein entsprechender Schalter oder ein Bedienelement im Bereich des Generatorgehäuses vorgesehen sein, bei dessen Betätigung die vorgenannte Anpassung an die Drehrichtung der Zapfwelle einleitbar ist. Des Weiteren kann neben der Datenschnittstelle auch eine Stromanschlussstelle vorgesehen sein, über welche die Steuerelektronik durch das Bordnetz des Nutzfahrzeuges oder über das Anbaugerät mit Energie versorgt werden kann, so dass eine Funktion der Steuerelektronik auch bei fehlender Stromversorgung über den zumindest einen elektrischen Generator sichergestellt ist. Im Rahmen der Erfindung ist jedoch auch ein autarker Betrieb der Steuerelektronik und damit auch des zumindest einen Generators ohne Verbindung zum Nutzfahrzeug oder zum Anbaugerät möglich.

In Weiterbildung der Erfindung steht der zumindest ein Generator mit mindestens einer Ausgabeschnittstelle in Verbindung. Über die eine oder mehreren Ausgabeschnittstellen kann dann eine Versorgung von elektrischen Geräten und/oder Anrieben insbesondere seitens des Anbaugeräts sichergestellt werden. Dabei kann der Generator entweder direkt mit der jeweiligen Ausgabeschnittstelle verbunden sein, so dass eine Wechselspannung mit Generatorfrequenz an dieser Ausgabeschnittstelle abgreifbar ist, es ist aber auch denkbar einen Gleichrichter unter Erzeugung einer Gleichspannung zwischenzuschalten oder einen aus einem Gleichrichter und einem oder mehreren Wechselrichtern aufgebauten Gleichspannungszwischenkreis vorzusehen, so dass eine Wechselspannung mit Frequenz ungleich der Generatorfrequenz abgreifbar ist. Ferner kann auch ein DC/DC-Wandler vorgesehen werden, so dass der zumindest eine Generator eine Versorgungsspannung für Komponenten, wie beispielsweise die Steuerelektronik, selbst erzeugt. Diesem DC/DC-Wandler kann dabei auch eine Ausgabeschnittstelle nachgeschaltet sein, so dass eine elektrische Versorgung des Anbaugeräts mit einer elektrischen Spannung auf einem definierten Spannungsniveau, beispielsweise 12 oder 24 Volt, vorgenommen werden kann. Schließlich ist auch das Vorsehen einer Niederspannungsbatterie denkbar, so dass eine Stromversorgung von Komponenten der Generatoreinheit auch bei stehendem Generator gewährleistet ist.

Entsprechend einer weiteren Ausgestaltung der Erfindung ist ein Kühlsystem vorgesehen. Im Rahmen der Erfindung kann es sich hierbei entweder um eine autonome Kühlung seitens der Generatoreinheit, beispielsweise eine Luft oder Flüssigkeitskühlung, oder eine Verbindung zu einem fahrzeugseitigen Kühlkreis handeln. In einer bevorzugten Ausgestaltung besitzt die Generatoreinheit eine eigene Kühlmittelpumpe, welche das Kühlmittel zwischen zu kühlenden Komponenten, wie zum Beispiel dem zumindest einen Generator und der Steuerelektronik, und einem Wärmetauscher oder einem Kühler fördert. Der Wärmetauscher oder Kühler kann dabei seitens der Generatoreinheit oder auch seitens des Nutzfahrzeuges untergebracht sein. Schließlich ist auch noch eine Kühlung durch Arbeitshydrauliköl des Nutzfahrzeuges oder des Anbaugeräts denkbar.

In Weiterbildung der Erfindung ist ein Schmiermittelkreislauf vorgesehen. Eine derartige Ausgestaltung hat den Vorteil, dass durch Vorsehen einer entsprechenden Schmiermittelversorgung bewegte Teile der Generatoreinheit, wie beispielsweise Elemente eines zwischenliegenden Getriebes, zuverlässig geschmiert und damit deren Verschleiß abgemindert werden kann. Bevorzugt ist der Schmiermittelkreislauf hierbei als Ölschmierung mit einer Pumpe und einem Ölsumpf ausgebildet. Alternativ dazu ist allerdings auch eine Ausführung als Öltauchschmierung denkbar.

Die Erfindung ist nicht auf die angegebenen Kombinationen der Merkmale des Hauptanspruchs oder der abhängigen Ansprüche beschränkt. Es ergeben sich darüber hinaus Möglichkeiten, einzelne Merkmale, auch sowie sie aus den Ansprüchen, der nachfolgenden Beschreibung von Ausführungsformen oder unmittelbar aus den Zeichnungen hervorgehen, miteinander zu kombinieren. Die Bezugnahme der Ansprüche auf die Zeichnungen durch Verwendung von Bezugszeichen soll den Schutzumfang der Ansprüche nicht beschränken.

Weitere, vorteilhafte Ausgestaltungen der Erfindung ergeben sich aus der nachfolgenden Beschreibung bevorzugter Ausführungsformen der Erfindung, die Bezug auf die in den Zeichnungen dargestellten Figuren nimmt. Es zeigt:
- Fig. 1: eine schematische Darstellung einer erfindungsgemäßen Generatoreinheit gemäß einer ersten bevorzugten Ausführungsform der Erfindung;
- Fig. 2: eine perspektivische Darstellung im Bereich eines Krafthebers eines Nutzfahrzeuges, an welchem die erfindungsgemäße Generatoreinheit gemäß Fig. 1 angegliedert ist;
- Fig. 3: eine weitere perspektivische Ansicht im Bereich des Krafthebers; und
- Fig. 4: eine schematische Darstellung einer erfindungsgemäßen Generatoreinheit gemäß einer zweiten bevorzugten Ausgestaltungsmöglichkeit der Erfindung.

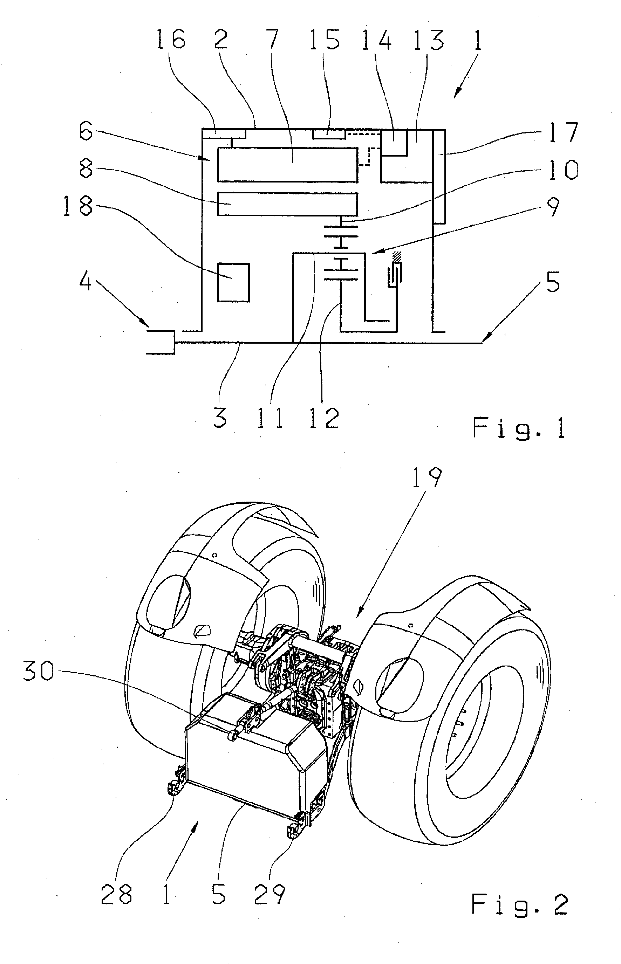

Aus Fig. 1 geht eine schematische Darstellung einer erfindungsgemäßen Generatoreinheit 1 gemäß einer ersten bevorzugten Ausführungsform der Erfindung hervor. Diese Generatoreinheit 1 umfasst dabei ein Generatorgehäuse 2, in welchem eine Welle 3 drehbar gelagert ist. Dabei bildet diese Welle 3 an einem ersten Ende eine Ankoppelung 4 in Form eines innenverzahnten Wellenabschnitts aus, über welchen bei Anordnung der Generatoreinheit 1 im Bereich eines Krafthebers eines Nutzfahrzeuges eine Ankoppelung an eine Zapfwelle des Nutzfahrzeuges erfolgen kann und der zu diesem Zweck mit einem zu der jeweiligen Zapfwelle korrespondierenden Keilwellen- oder Evolventenverzahnungsprofil versehen ist. An einem zur Ankoppelung 4 entgegengesetzten Ende der Welle 3 ist hingegen ein Anschluss 5 für die Anbindung einer Eingangswelle eines Anbaugeräts definiert, wobei dieser Anschluss 5 dabei ein der jeweiligen Zapfwelle des Nutzfahrzeuges entsprechendes Profil aufweist, so dass anstelle einer direkten Anbindung an die Zapfwelle problemlos ein Anbinden am Anschluss 5 möglich wird. Der Anschluss 5 ist dabei bezüglich der Ankopplung 4 auf einer entgegengesetzten Seite des Generatorgehäuses 2 vorgesehen, wobei die Welle 3 zu diesem Zweck durch das Generatorgehäuse 2 hindurchgeführt ist.

Wie des Weiteren aus Fig. 1 ersichtlich ist, nimmt das Generatorgehäuse 2 des Weiteren einen koaxial zur Welle 3 liegenden elektrischen Generator 6 auf, dessen Stator 7 ortsfest im Generatorgehäuse 2 angeordnet ist. Im radialen Innenbereich des Stators 7 ist dabei ein Rotor 8 vorgesehen, welcher bei einer Drehbewegung eine Spannung in dem stillstehenden Stator 7 induziert und damit elektrische Energie erzeugt. Um nun die Drehbewegung des Rotors 8 einzuleiten, steht der Rotor 8 mit der Welle 3 über ein zwischenliegendes Getriebe 9 in Verbindung, welches vorliegend als Planetengetriebe ausgestaltet ist. Dabei ist der Rotor 8 mit einem Hohlrad 10 des Getriebes verbunden, während die Welle 3 mit einem Planetensteg 11 gekoppelt ist und einen Sonnenrad 12 über eine Bremse am Generatorgehäuse 2 festgesetzt werden kann. Eine Übersetzung des Getriebes 9 ist dabei derartig gewählt, dass bei einer einer Zapfwellendrehzahl entsprechenden Drehbewegung der Welle 3 eine Drehbewegung des Rotors 8 hervorgerufen wird, welche für die Generator 6 optimal gewählt ist. Dementsprechend ist es möglich, als Generator 6 eine kompaktbauende und schnell laufende elektrische Maschine zu verwenden, welche einen elektrischen Strom mit einem für ein Anbaugerät geeignetem Spannungsniveau erzeugt.

Des Weiteren ist in dem Gehäuse 2 eine Steuerelektronik 13 aufgenommen, welche zur Ansteuerung des Generators 6 vorgesehen ist. Diese Steuerelektronik 13 umfasst dabei ein Steuergerät 14, über welches der Generator 6 geregelt wird und das über eine am Generatorgehäuse 2 ausgestaltete Datenschnittstelle 15 mit dem Nutzfahrzeug und ggf. auch mit einem Anbaugerät über einen Datenbus verbunden werden kann. Über diese Datenschnittstelle 15 kann eine Regelstrategie des Generators 6 entsprechend mit einem fahrzeugseitigen und/oder anbaugerätseitigen Regelsystem abgestimmt werden, wobei über das Steuergerät 14 auch gezielt ein Zuschalten des Generators 6 durch Festsetzen des Sonnenrades 12 mittels Ansteuerung der Bremse möglich ist.

Ferner steht der Stator 7 mit einer Ausgabeschnittstelle 16 in Verbindung, über welche die durch den Generator 6 erzeugte elektrische Leistung elektrischen Geräten und/oder Antrieben des Anbaugeräts zugeführt werden kann. Dabei ist diese Ausgabeschnittstelle 16 direkt mit dem Generator 6 verbunden, so dass an der Ausgabeschnittstelle 16 eine Wechselspannung mit Generatorfrequenz abgreifbar ist. Des Weiteren ist in dem Generatorgehäuse 2 noch ein Kühlsystem 17 und ein Schmiermittelkreislauf 18 aufgenommen, welche vorliegend aber aus Gründen der Übersichtlichkeit beide nur stark schematisch dargestellt sind. Über das Kühlsystem 17 kann dabei eine Kühlung des Generators 6 und auch der Steuerelektronik 13 bewirkt werden, wobei das Kühlsystem 17 vorliegend als Luftkühlung, beispielsweise durch entsprechende Kühlrippen am Generatorgehäuse 2, ausgeführt ist. Hingegen wird über den Schmiermittelkreislauf 18 eine Schmierung der bewegten Teile des Getriebes 9 bewerkstelligt, wobei der Schmiermittelkreislauf 18 zu diesem Zweck beispielsweise eine Pumpe und einen Ölsumpf besitzen kann, über welche gezielt Schmiermittel zudosiert wird.

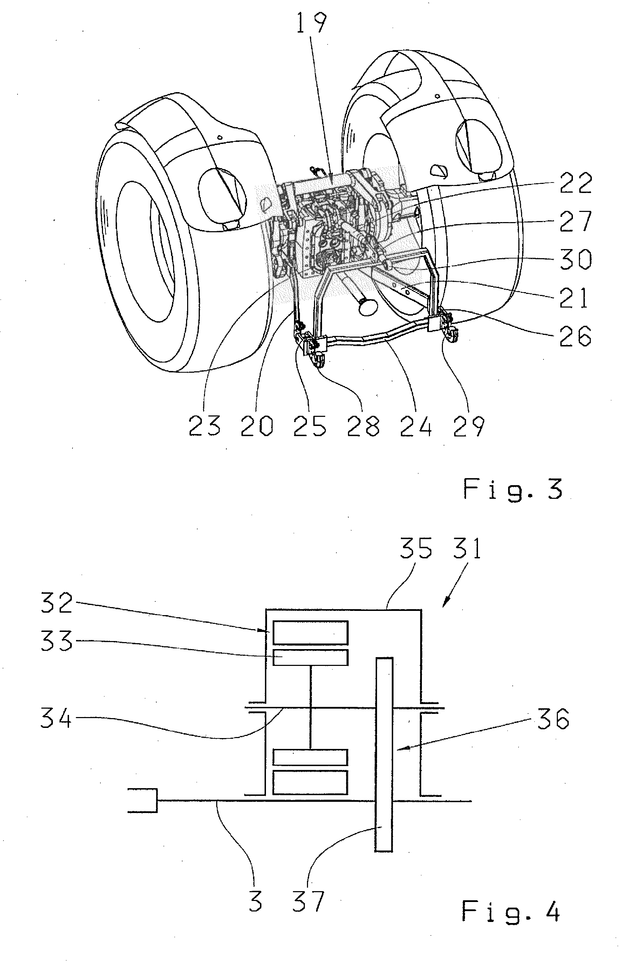

Um nun das Generatorgehäuse 2 zur Aufnahme eines großbauenden und leistungsfähigen Generators 6 entsprechend gestalten zu können, erfolgt eine Anbindung der Generatoreinheit 1 an ein Nutzfahrzeug mittels einer besonderen Ausgestaltung außerhalb des Generatorgehäuses 2, auf welche unter Hinzuziehung der Fig. 2 und 3 nun näher eingegangen werden soll:
In Fig. 2 ist die erfindungsgemäße Generatoreinheit 1 an einem heckseitigen Kraftheber 19 eines Nutzfahrzeuges in Form eines Traktors angebunden. Dieser Dreipunktkraftheber 19 weist dabei einen, dem Fachmann bekannten Aufbau auf und setzt sich aus zwei Unterlenkern 20 und 21 und einem Oberlenker 22 zusammen, welche insbesondere in Fig. 3 zu erkennen sind, in welcher aus Gründen der Übersichtlichkeit das Generatorgehäuse 2 weggelassen wurde. Von dem Kraftheber 19 sind die Lenker 20, 21 und 22 über vorliegend nicht dargestellte Hydraulikzylinder anhebbar oder absenkbar, so dass eine Arbeitshöhe des Krafthebers 19 einstellbar ist. Zudem ist der Oberlenker 22 als Gewindespindel ausgeführt, über deren gezielte Längenänderung eine Neigung eines an dem Kraftheber 19 angeordneten Geräts einstellbar ist.

Vorliegend ist an dem Kraftheber 19 nun die Generatoreinheit 1 angegliedert, wobei die Welle 3 der Generatoreinheit 1, von welcher in Fig. 2 nur der Anschluss 5 zu erkennen ist, über die Ankopplung 4 mit einer, in Fig. 3 zu sehenden, Zapfwelle 23 des Nutzfahrzeuges verbunden ist. Um nun den Kraftheber 19 trotz des zwischenliegenden Generatorgehäuses 2 für die Aufnahme eines weiteren Anbaugeräts nutzen zu können, wobei über die Generatoreinheit 1 in diesem Fall elektrische Energie zum Betreiben einzelner Geräte oder Antriebe dieses Anbaugeräts zur Verfügung gestellt wird, verfügt die Generatoreinheit 1 über eine Aufnahmevorrichtung in Form eines Tragrahmens 24, dessen Aufbau insbesondere aus Fig. 3 ersichtlich wird. Dieser Tragrahmen 24 ist dabei als separates Bauteil ausgeführt, an welchem das Generatorgehäuse 2 befestigt ist. Zudem verfügt der Tragrahmen 24 über eine dreieckförmige Gestalt, wobei im Bereich von Eckpunkten dieses Dreiecks auf einer dem Nutzfahrzeug zugewandten und seitens der Ankopplung 4 liegenden Seite des Generatorgehäuses 2 Aufnahmestellen 25, 26 und 27 ausgebildet sind, über welche eine Anbindung der Generatoreinheit 1 an die Unterlenker 20 und 21 und an den Oberlenker 22 des Krafthebers 19 dargestellt wird. Diese Aufnahmestellen sind dabei jeweils als Aufnahmebolzen ausgeführt, die zu jeweiligen Fanghaken der Unterlenker 20 und 21 und des Oberlenkers 22 korrespondieren. Dementsprechend kann die Generatoreinheit 1 über die Aufnahmestellen 25 bis 27 an dem Kraftheber 19 eingehängt werden.

Hingegen bildet der Tragrahmen 24 auf der Seite des Anschlusses 5 des Generatorgehäuses 2 ebenfalls im Bereich von Eckpunkten des Dreiecks jeweils Anbindungsstellen 28, 29 und 30 aus, an welchen das weitere vorzusehende Anbaugerät angehängt werden kann und die hierbei in Gestalt und Ausrichtung jeweils dem jeweiligen Fanghaken der Unterlenker 20 und 21 und des Oberlenkers 22 entsprechen. Hierbei sind die Anbindungsstellen 28 bis 30 also jeweils als Aufnahmehaken ausgestaltet, wobei ein Aufnahmehaken der Anbindungsstelle 28 dem Fanghaken des Unterlenkers 20, ein Aufnahmehaken der Anbindungsstelle 29 einem Fanghaken des Unterlenkers 21 und ein Aufnahmehaken der Anbindungsstelle 30 einem Fanghaken des Oberlenkers 22 hinsichtlich der Gestaltung und der Ausrichtung entspricht. In der Folge kann das weitere Anbaugerät an dem Tragrahmen 24 in gleicher Art und Weise angeordnet werden, wie es auch direkt an dem davorliegenden Kraftheber 19 möglich wäre. Dementsprechend kann die Generatoreinheit 1 ohne Funktionseinbußen zwischen Kraftheber 19 und dem jeweiligen Anbaugerät platziert werden.

Aus Fig. 4 geht eine zweite bevorzugte Ausgestaltungsmöglichkeit einer erfindungsgemäßen Generatoreinheit 31 hervor. Im Unterschied zu der im Vorfeld beschriebenen Variante ist ein Generator 32 in diesem Fall nicht koaxial zur Welle 3 angeordnet, sondern achsversetzt platziert, indem ein Rotor 33 des Generators 32 mit einer parallel zur Welle 3 verlaufenden Rotorwelle 34 verbunden ist. Dabei ist diese Generatorwelle 34 ebenso wie die Welle 3 in einem Generatorgehäuse 35 drehbar gelagert und steht ferner über ein zwischenliegendes Getriebe 36 in Form eines Zugmitteltriebes mittels einer Kette 37 mit der Welle 3 in Verbindung. Dabei wird über diesen Zugmitteltrieb eine Drehbewegung der Welle 3 entsprechend auf die Rotorwelle 34 übertragen. Im Übrigen ist die Ausgestaltung gemäß Fig. 4 aber gleich der im Vorfeld beschriebenen Variante ausgestaltet.

Mittels der erfindungsgemäßen Ausgestaltungen einer Generatoreinheit 1 bzw. 31 ist es somit möglich, auch leistungsfähige und großbauende elektrische Generatoren 6 bzw. 32 als mobile Einheit an einem Kraftheber 19 anzuordnen und dabei diesen Kraftheber 19 trotzdem weiterhin für die Anordnung eines weiteren Anbaugeräts zu nutzen.

### Bezugszeichen

- 1: Generatoreinheit
- 2: Generatorgehäuse
- 3: Welle
- 4: Ankoppelung
- 5: Anschluss
- 6: Generator
- 7: Stator
- 8: Rotor
- 9: Getriebe
- 10: Hohlrad
- 11: Planetensteg
- 12: Sonnenrad
- 13: Steuerelektronik
- 14: Steuergerät
- 15: Datenschnittstelle
- 16: Ausgabeschnittstelle
- 17: Kühlsystem
- 18: Schmiermittelkreislauf
- 19: Kraftheber
- 20: Unterlenker
- 21: Unterlenker
- 22: Oberlenker
- 23: Zapfwelle
- 24: Tragrahmen
- 25: Aufnahmestelle
- 26: Aufnahmestelle
- 27: Aufnahmestelle
- 28: Anbindungsstelle
- 29: Anbindungsstelle
- 30: Anbindungsstelle
- 31: Generatoreinheit
- 32: Generator
- 33: Rotor
- 34: Rotorwelle
- 35: Generatorgehäuse
- 36: Getriebe
- 37: Kette

## Patentansprüche

1. Generatoreinheit (1; 31) für ein landwirtschaftliches oder kommunales Nutzfahrzeug, insbesondere einen Traktor, umfassend ein Generatorgehäuse (2; 35) und mindestens eine Welle (3), welche drehbar gelagert durch das Generatorgehäuse (2; 35) hindurchgeführt ist und an einem ersten Ende eine Ankoppelung (4) für eine Zapfwelle (23) des Nutzfahrzeuges ausbildet, während durch die mindestens eine Welle (3) an einem zweiten Ende ein Anschluss (5) für eine Eingangswelle eines Anbaugeräts definiert ist, wobei in dem Generatorgehäuse (2; 35) zumindest ein elektrischer Generator (6; 32) aufgenommen ist, welcher durch die mindestens eine Welle (3) antreibbar ist, **dadurch gekennzeichnet, dass** zudem eine Aufnahmevorrichtung vorgesehen ist, welche mit dem Generatorgehäuse in Verbindung steht und seitens des ersten Endes der mindestens einen Welle (3) Aufnahmestellen (25, 26, 27) zur Anbindung an Aufhängevorrichtungen eines Krafthebers (19) des Nutzfahrzeuges ausbildet, wohingegen die Aufnahmevorrichtung seitens des zweiten Endes der mindestens einen Welle (3) über Anbindungsstellen (28, 29, 30) zur Aufnahme des Anbaugeräts verfügt, wobei die Anbindungsstellen (28, 29, 30) der Aufnahmevorrichtung den Aufhängevorrichtungen des Krafthebers (19) jeweils in Gestalt und Ausrichtung entsprechen.

2. Generatoreinheit nach Anspruch 1, **dadurch gekennzeichnet, dass** die Aufnahmevorrichtung als Tragrahmen (24) mit einer dreieckförmigen Gestalt ausgeführt ist, welcher im Bereich von Eckpunkten mit jeweils einer Aufnahmestelle (25, 26, 27) in Form je eines Aufnahmebolzens und mit jeweils einer, entgegengesetzt zur jeweiligen Aufnahmestelle (25, 26, 27) orientierten Anbindungsstelle (28, 29, 30) in Form je eines Aufnahmehakens versehen ist, wobei die Aufnahmebolzen zu den in Form von Fanghaken vorliegenden Aufhängevorrichtungen korrespondieren und die Aufnahmehaken den Fanghaken in Gestalt und Ausrichtung entsprechen.

3. Generatoreinheit nach Anspruch 1, **dadurch gekennzeichnet, dass** die Aufnahmestellen (25, 26, 27) und die Anbindungsstellen (28, 29, 30) jeweils als lösbare Einzelelemente der Aufnahmevorrichtung ausgestaltet sind.

4. Generatoreinheit nach Anspruch 1, **dadurch gekennzeichnet, dass** die Aufnahmevorrichtung als separates Bauteil ausgeführt ist, an welchem das Generatorgehäuse (2; 35) angebracht ist.

5. Generatoreinheit nach Anspruch 1, **dadurch gekennzeichnet, dass** zwischen der mindestens einen Welle (3) und dem zumindest einen elektrischen Generator (6; 32) je ein Getriebe (9; 36) vorgesehen ist, durch welches eine Drehbewegung der mindestens einen Welle (3) auf je einen Rotor (8; 33) des zumindest einen Generators (6; 32) übersetzbar ist.

6. Generatoreinheit nach Anspruch 1, **dadurch gekennzeichnet, dass** eine Steuerelektronik (13) vorgesehen ist, welche mit dem zumindest einen Generator (6; 32) in Verbindung steht.

7. Generatoreinheit nach Anspruch 6, **dadurch gekennzeichnet, dass** die Steuerelektronik (13) über ein Steuergerät (14) verfügt, welches den zumindest einen Generator (6; 32) regelt und mit einer Datenschnittstelle (15) verbunden ist.

8. Generatoreinheit nach Anspruch 1, **dadurch gekennzeichnet, dass** der zumindest einen Generator (6; 32) mit mindestens einer Ausgabeschnittstelle (16) in Verbindung steht.

9. Generatoreinheit nach Anspruch 1, **dadurch gekennzeichnet, dass** ein Kühlsystem (17) vorgesehen ist.

10. Generatoreinheit nach Anspruch 1, **dadurch gekennzeichnet, dass** ein Schmiermittelkreislauf (18) vorgesehen ist.

## Claims

1. Generator unit (1; 31) for an agricultural or municipal utility vehicle, in particular a tractor, comprising a generator housing (2; 35) and at least one shaft (3) which is guided in a rotatably mounted fashion through the generator housing (2; 35) and forms at a first end a coupling (4) for a power take-off shaft (23) of the utility vehicle, while a connection (5) for an input shaft of an attachment device is defined at a second end by the at least one shaft (3), wherein at least one electric generator (6; 32), which can be driven by the at least one shaft (3), is received in the generator housing (2; 35), **characterized in that** in addition a receptacle device is provided which is connected to the generator housing and forms, at the first end of the at least one shaft (3), receptacle points (25, 26, 27) for connecting to suspension devices of a power lift (19) of the utility vehicle, whereas the receptacle device at the second end of the at least one shaft (3) has connecting points (28, 29, 30) for receiving the attachment device, wherein the connecting points (28, 29, 30) of the receptacle device correspond to the suspension devices of the power lift (19), in each case in shape and orientation.

2. Generator unit according to Claim 1, **characterized in that** the receptacle device is embodied as a carrying frame (24) with a triangular shape, which carrying frame (24) is provided in the region of corner points with, in each case, a receptacle point (25, 26, 27) in the form of, in each case, a receptacle bolt and with, in each case, a connecting point (28, 29, 30) which is oriented opposite the respective receptacle point (25, 26, 27) and is in the form of, in each case, a receptacle hook, wherein the receptacle bolts correspond to the suspension devices which are present in the form of catch hooks, and the receptacle hooks correspond to the catch hooks in shape and orientation.

3. Generator unit according to Claim 1, **characterized in that** the receptacle points (25, 26, 27) and the connecting points (28, 29, 30) are each configured as releasable individual elements of the receptacle device.

4. Generator unit according to Claim 1, **characterized in that** the receptacle device is embodied as a separate component to which the generator housing (2; 35) is attached.

5. Generator unit according to Claim 1, **characterized in that** in each case a gear mechanism (9; 36) is provided between the at least one shaft (3) and the at least one electric generator (6; 32), by means of which gear mechanism (9; 36) a rotational movement of the at least one shaft (3) can be transmitted to in each case one rotor (8; 33) of the at least one generator (6; 32).

6. Generator unit according to Claim 1, **characterized in that** control electronics (13), which are connected to the at least one generator (6; 32), are provided.

7. Generator unit according to Claim 6, **characterized in that** the control electronics (13) have a control device (14) which regulates the at least one generator (6; 32) and is connected to a data interface (15).

8. Generator unit according to Claim 1, **characterized in that** the at least one generator (6; 32) is connected to at least one output interface (16).

9. Generator unit according to Claim 1, **characterized in that** a cooling system (17) is provided.

10. Generator unit according to Claim 1, **characterized in that** a lubricant circuit (18) is provided.

## Revendications

1. Groupe générateur (1 ; 31) pour un véhicule utilitaire agricole ou communal, notamment un tracteur, comprenant un carter de générateur (2 ; 35) et au moins un arbre (3) introduit à travers le carter de générateur (2 ; 35) de façon à être placé de façon à pouvoir tourner et formant un accrochage (4) pour une prise de force (23) du véhicule utilitaire au niveau d'une première extrémité tandis qu'un raccord (5) pour un arbre d'entrée d'un appareil annexe est défini par l'au moins un arbre (3) au niveau d'une deuxième extrémité, sachant qu'au moins un générateur électrique (6 ; 32) est reçu dans le carter de générateur (2 ; 35), ledit générateur pouvant être entraîné par l'au moins un arbre (3), **caractérisé en ce qu'**on prévoit en outre un dispositif de réception relié au carter de générateur et formant du côté de la première extrémité de l'au moins un arbre (3) des points de réception (25, 26, 27) pour le raccordement à des dispositifs d'accroche d'un système de relevage (19) du véhicule utilitaire, tandis que le dispositif de réception du côté de la deuxième extrémité de l'au moins un arbre (3) dispose de points de raccordement (28, 29, 30) pour recevoir l'appareil annexe, les points de raccordement (28, 29, 30) du dispositif de réception correspondant, respectivement dans leur forme et leur orientation, aux dispositifs d'accroche du système de relevage (19).

2. Groupe générateur selon la revendication 1, **caractérisé en ce que** le dispositif de réception prend la forme d'un châssis porteur (24) prenant une forme de triangle pourvu dans la zone des points en coin de respectivement un point de logement (25, 26, 27) prenant respectivement la forme d'un logement de boulon et avec respectivement un point de raccordement (28, 29, 30) orienté de façon opposée au point de logement (25, 26, 27) respectif prenant respectivement la forme d'un crochet récepteur, les boulons de réception correspondant aux dispositifs d'accroche présents sous la forme de crochets de préhension et les crochets de réception correspondant dans leur forme et leur orientation aux crochets de préhension.

3. Groupe générateur selon la revendication 1, **caractérisé en ce que** les points de réception (25, 26, 27) et les points de raccordement (28, 29, 30) sont configurés respectivement sous la forme d'éléments individuels amovibles du dispositif de réception.

4. Groupe générateur selon la revendication 1, **caractérisé en ce que** le dispositif de réception prend la forme d'un composant séparé au niveau duquel le carter de générateur (2 ; 35) est placé.

5. Groupe générateur selon la revendication 1, **caractérisé en ce qu'**une boîte de vitesses (9 ; 36) est prévue entre l'au moins un arbre (3) et l'au moins un générateur électrique (6 ; 32) respectivement, un mouvement de rotation de l'au moins un arbre (3) sur respectivement un rotor (8 ; 33) de l'au moins un générateur (6 ; 32) pouvant être démultiplié grâce à elle.

6. Groupe générateur selon la revendication 1, **caractérisé en ce qu'**un système électronique de commande (13) est prévu, celui-ci étant relié à l'au moins un générateur (6 ; 32).

7. Groupe générateur selon la revendication 6, **caractérisé en ce que** le système électronique de commande (13) dispose d'un appareil de commande (14) régulant l'au moins un générateur (6 ; 32) et relié à une interface de données (15).

8. Groupe générateur selon la revendication 1, **caractérisé en ce que** l'au moins un générateur (6 ; 32) est relié à au moins une interface d'émission (16).

9. Groupe générateur selon la revendication 1, **caractérisé en ce qu'**un système de refroidissement (17) est prévu.

10. Groupe générateur selon la revendication 1, **caractérisé en ce qu'**un circuit de moyen lubrifiant (18) est prévu.
